# EUROPÄISCHE PATENTSCHRIFT

(11) **EP 0 551 303 B1**
(45) Veröffentlichungstag und Bekanntmachung des Hinweises auf die Patenterteilung: **14.08.1996**
(21) Anmeldenummer: 91916550.6
(22) Anmeldetag: 25.09.1991
(51) Int. Cl.: H04N 7/087, H04N 5/44

(54) **VERFAHREN ZUM ÜBERTRAGEN VON TELETEXTDATEN**
PROCESS FOR TRANSMITTING TELETEXT DATA
PROCEDE POUR LA TRANSMISSION DE DONNEES DE TYPE TELETEXTE

(30) Priorität: 04.10.1990 DE 4031213
(43) Veröffentlichungstag der Anmeldung: 21.07.1993
(73) Patentinhaber: Thomson Consumer Electronics Sales GmbH, 30453 Hannover (DE)
(72) Erfinder: EITZ, Gerhard, D-8011 Poing (DE); MÖLL, Gerhard, D-8032 Gräfelfing (DE)
(74) Vertreter: Hartnack, Wolfgang, Dipl.-Ing.
(86) Internationale Anmeldenummer: EP9101831
(87) Internationale Veröffentlichungsnummer: WO9206562

(56) Entgegenhaltungen:
- EP-A- 0 339 675
- DE-A- 3 914 697
- 5. Conference and Exhibition on Television Techniques, Band II, 12-14. Juni 1990, Budapest, HU, J.C. Guillon: "Multi-feature, multi-format 16/9 TV set", Seiten 55-62, siehe Figur 1d; Seite 56, Zeile 31 - Seite 57, Zeile 5
- Revue HF, Band XIII, Nr. 10, 1987, (Brussel, BE) Ir. K. van Bruwaene: "De evolutie van teletext"
- Television, Band 18, Nr. 5, September-Oktober 1980, (Londen, GB) J.P. Chambers: "Potential of extended teletext", Seiten 43-45, siehe den ganzen Artikel
- 5. Conference and Exhibition on Television Techniques, Band I, 12-14. Juni 1990, Budapest, HU, P. Ferenczy: "A new strategy to control the ECCT teletext decoder IC", Seiten 207-214, siehe den ganzen Artikel

## Beschreibung

Die Erfindung bezieht sich auf ein Verfahren gemäß dem Oberbegriff des Patentanspruchs. Ein derartiges Verfahren ist aus der nicht vorveröffentlichten Druckschrift DE 39 14 697 A1 bekannt.

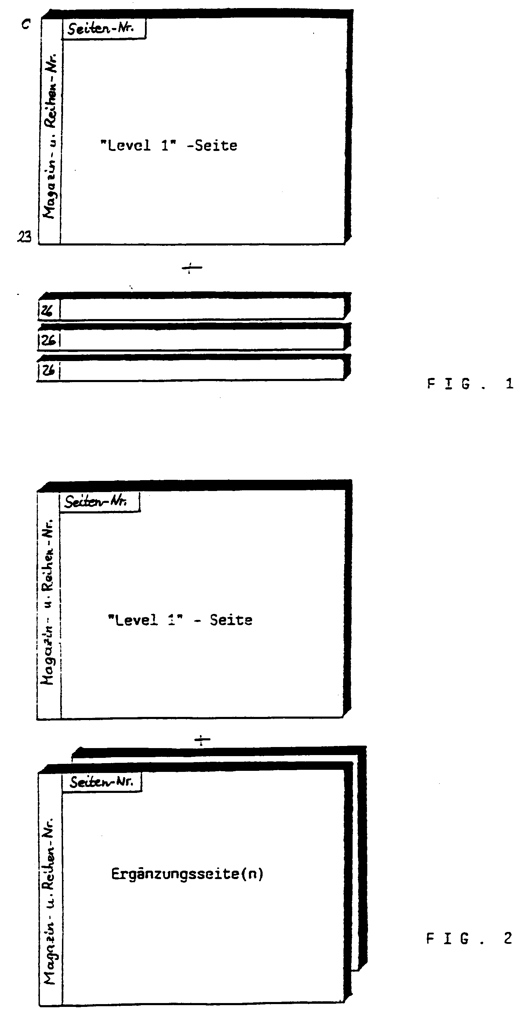

Bei dem herkömmlichen, derzeit in Europa (mit Ausnahme von Frankreich) benutzten Teletextsystem wird der sog. "Level 1" des Teletext-Standards WST (World System Teletext) benutzt, welcher Texte und graphische Darstellungen mit eingeschränktem Grundzeichensatz auf einem Bildschirm mit dem Seiten-Höhen-Format 4:3 darstellt. Sonderzeichen, Feinstrukturen und Farbschattierungen sieht der WST-Standard in seinen Ausbaustufen "Level 2" und "Level 3" vor, wobei die Übertragung von Ergänzungsdaten in sog. Pseudoreihen (auch "ghost rows" genannt) erfolgt, welche vom "Level 1" nicht genutzte, jedoch im Übertragungsformat freigehaltene, adressierbare Reihennummern tragen. Bei Bedarf müssen mehrere Reihen mit derselben Reihennummer zur Übertragung der notwendigen Menge von Ergänzungsdaten verwendet werden, wie anhand von Fig. 1 für die Reihennummer # 26 veranschaulicht ist (vgl. "Rundfunktechnische Mitteilungen" 27. Jg. (1983), Heft 3, S. 116 bis 134). Da der Teletext-Empfänger keine Information über die Anzahl der jeweils zu einer Teletextseite (Grunddaten) übertragenen Pseudoreihen erhält, "weiß" der Decoder nicht, ob, welche und ggf. wieviele Pseudoreihen zu einer Teletextseite ausgesendet worden sind.

Eine korrekte Auswertung kann daher nur dann erfolgen, wenn die gewünschte Teletextseite und alle zugeordneten Pseudoreihen vollständig empfangen werden. Ferner muß in dem Decoder für jede abzuspeichernde Teletextseite ein zusätzlicher Speicherraum, z.B. 4 kByte, ständig verfügbar gehalten werden, welcher bei fehlender Übertragung von Pseudoreihen nicht anderweitig nutzbar ist.

Um eine effizientere Übertragung und schnellere Verarbeitung der Ergänzungsdaten zu ermöglichen, ohne die volle Kompatibilität zu bestehenden, nach "Level 1" arbeitenden Teletextempfänger zu verlieren, ist es aus der DE 39 14 697 A1 bekannt, zusätzlich zu herkömmlichen Teletextseiten ("Grundseiten") sogenannte Ergänzungsseiten zu übertragen, die vorzugsweise im Format der Teletextseiten strukturiert sind. Wie Fig. 2 zeigt, enthalten die zu einer bestimmten Teletextseite zugeordnete(n) Ergänzungsseite(n) die für einen höheren WST-Level (z.B. Level 2/3) fehlenden Daten ("Ergänzungsdaten").

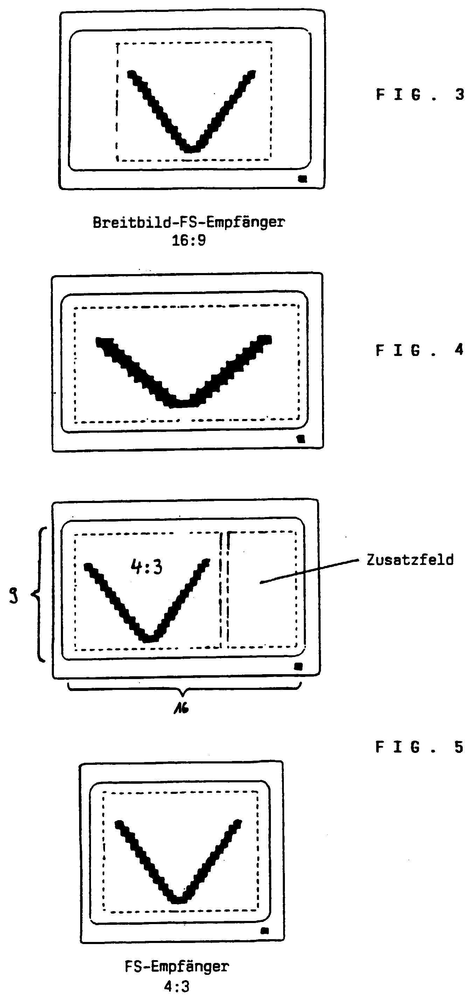

Im Empfänger werden Grunddaten und Ergänzungsdaten von dem Videosignal abgetrennt und zu jeweils einer Teletextseite auf einem Bildschirm mit einem Seiten-Höhen-Format 4:3 zusammengestellt. Bei einem Bildschirm mit einem erweiterten Seiten-Höhen-Format von 16:9 ist die Darstellung von Teletextseiten im 4:3-Format aber nur unbefriedigend möglich, da entweder bei unverzerrter Darstellung ca. 40% des 16:9-Bildschirms ungenützt bleiben (sh. Fig. 3) oder bei entsprechender formatfüllender horizontal gestreckter Darstellung nicht akzeptierbare Verzerrungen des Gesamtbildes auftreten (Fig. 4).

Es ist ferner aus der DE 39 12 805 A1 bekannt, auf einem Breitbildfernsehschirm die Teletextinformationen im herkömmlichen Seiten-Höhen-Format von 4:3 darzustellen und die freien Flächen an den Rändern des Breitbildfernsehschirms für die Darstellung von Benutzerführungsinformationen zu verwenden. Darüber hinaus ist es auch schon bekannt (DE 39 23 907 A1), Teletextsignale und Videosignale gleichzeitig nebeneinander auf einem Bildschirm darzustellen.

Die Aufgabe der Erfindung besteht demgegenüber darin, eine kompatible Übertragung von Teletextseiten für 16:9-Bildschirme zu ermöglichen.

Diese Aufgabe wird erfindungsgemäß durch die Merkmale des Patentanspruchs gelöst.

Die Erfindung wird anhand eines in den Zeichnungen dargestellten Ausführungsbeispiels näher erläutert. Es zeigt:
- Fig. 1: eine schematische Darstellung des bekannten Teletext-WST-Standards;
- Fig. 2: eine schematische Darstellung zur Übertragung der Ergänzungsdaten in Ergänzungsseiten;
- Fig. 3: eine herkömmliche Teletextseite mit dem Seiten-Höhen-Format 4:3, die auf einem Empfänger mit dem Seiten-Höhen-Format 16:9 dargestellt wird;
- Fig. 4: eine horizontal auf 16:9 gestreckte 4:3-Teletextseite;
- Fig. 5: eine schematische Darstellung des erfindungsgemäßen Verfahrens;
- Fig. 6: Beispiel einer 16:9-Breitbild-Teletext-Seite;
- Fig. 7: Beispiel für die Nutzung eines 16:9-Breitbildschirms durch ein herkömmliches Fernsehbild im 4:3-Format und ein zusätzlich eingeblendetes Teletext-Zusatzfeld.

Bei dem erfindungsgemäßen Verfahren werden zusätzlich zu den herkömmlichen Teltextseiten ("Grundseiten") und den Ergänzungsseiten mit den für einen höheren WST-Level fehlenden Daten weitere Ergänzungsdaten zur Darstellung eines Zusatzfeldes auf den 16:9-Breitbildempfänger übertragen (sh. Fig. 5).

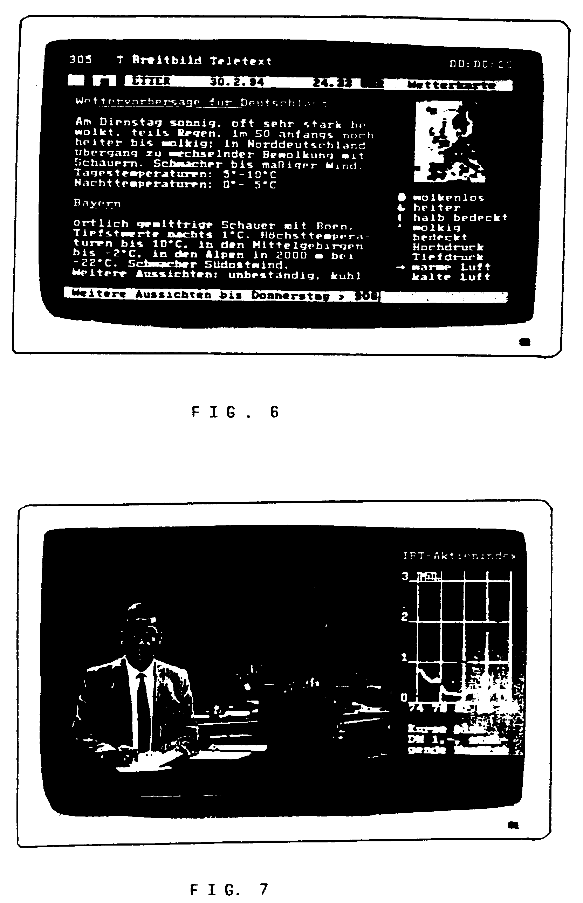

Während herkömmliche Decoder durch die 4:3-Bildschirme auf jeder Seite nur 24 Reihen mit 40 Zeichen darstellen können, ist bei zukünftigen 16:9-Bildschirmen die Anzeige einer Fernsehseite aus 24 Reihen mit beispielsweise je 40+16 Zeichen möglich. In diesem Zusatzfeld, das aus 24 Reihen mit je 16 Zeichen besteht,können beispielsweise neben Textinformationen auf der 4:3-Seite weitergehende erklärende Grafiken und Bilder dargestellt werden (sh. Fig. 6).

Die Ergänzungsdaten für das Zusatzfeld sind ähnlich codiert und formatiert (beispielsweise entsprechend der CEPT-Videotex-Codierung) wie die Ergänzungsdaten für die höheren Level.

In Empfängern mit 16:9-Bildschirmen werden die mittels Ergänzungsseiten übertragenen Ergänzungsdaten für das Zusatzfeld und für die höheren Level zusammen mit den Grunddaten ausgewertet und zu einer Teletextseite mit 56 Zeichen pro Reihe dargestellt, während die herkömmlichen Empfänger nur die Grunddaten gegebenenfalls zusammen mit den Ergänzungsdaten für höhere Level auswerten und auf dem 4:3-Bildschirm darstellen.

Fig. 7 zeigt eine weitere Anwendung für das erfindungsgemäße Zusatzfeld auf, mit der die bei Darstellung von FS-Programmen im 4:3-Format auf Bildschirmen im 16:9-Format entstehenden, nicht benutzten Bereiche sinnvoll genutzt werden können. So können beispielsweise eine Programmvorschau oder weitere Zusatzinformationen (hier ein Aktienindex) durch entsprechend ausgerüstete Decoder auf einem 16:9-Bildschirm neben dem 4:3-Bild des laufenden FS-Programms auf dem Zusatzfeld dargestellt werden.

## Patentansprüche

1. Verfahren zum Übertragen von sich vorzugsweise periodisch wiederholenden Teletextdaten in einem Fernsehsignal, bei dem empfangsseitig die Teletextdaten von dem Fernsehsignal getrennt, die zu jeweils einer Teletextseite gehörenden Daten gesammelt und die so zusammengestellten Teletextseiten ausgewertet werden, wobei sendeseitig zusätzlich zu den Teletext-Grunddaten von herkömmlich aufgebauten Teletextseiten Ergänzungsdaten für jeweils eine Teletextseite in Form einer oder mehrerer zugeordneter Ergänzungsseiten mit Seitennummern im Hexadezimalsystem übertragen werden, welche im Format herkömmlicher Teletextseiten strukturiert sind und empfangsseitig getrennt von den Grunddaten einer gewünschten Teletextseite ausgewertet werden, und wobei die im Hexadezimalsystem außerhalb des Dezimalsystems codierten Seitennummern der Ergänzungsseiten nach einem festgelegten Schema den im Dezimalsystem zugeordneten, per Zehnertastatur anwählbaren Seitennummern der zugeordneten, herkömmlichen Teletextseiten zugeordnet sind, **dadurch gekennzeichnet**, daß weitere Ergänzungsdaten mit eigenständigem Bildinhalt anstelle oder zusätzlich zu den Ergänzungsdaten in derselben Codierung und Formatierung übertragen werden und daß die weiteren Ergänzungsdaten auf einem Bildschirm mit einem Seiten-Höhen-Format von 16:9 im Bildbereich neben einer herkömmlichen Teletextseite oder neben einem herkömmlichen Fernsehbild mit jeweils einem Seiten-Höhen-Format von 4:3 wiedergegeben werden.

## Claims

1. A method for transferring preferably periodically repetitive teletext data in a television signal, in which on the receiver side the teletext data are separated from the television signal, the data belonging to a respective teletext page are collected and the teletext pages assembled in this way are evaluated whereby on the transmitter side, in addition to the basic teletext data of conventionally formed teletext pages, supplementary data for a respective teletext page are transmitted in the form of one or more associated supplementary pages with page numbers in the hexadecimal system which are structured in the format of conventional teletext pages and on the receiver side are evaluated separately from the basic data of a desired teletext page and whereby the page numbers of the supplementary pages coded in the hexadecimal system outside the decimal system are allocated in accordance with a fixed scheme to the page numbers of the associated conventional teletext pages, which are arranged in the decimal system and can be selected by means of a ten key keyboard, characterized in that further supplementary data with independent picture contents are transferred instead of or in addition to the supplementary data in the same coding and formatting and that the further supplementary data are reproduced on a picture screen with a width/height aspect ratio of 16:9 in the picture area beside a conventional teletext page or beside a conventional television picture with a width/height aspect ratio of 4:3 in each case.

## Revendications

1. Procédé pour la transmission dans un signal vidéo de données télétexte, de préférence à répétition périodique, où les données télétexte sont séparées du signal vidéo au niveau du récepteur, les données appartenant à une même page télétexte regroupées et où les pages télétexte ainsi constituées sont mémorisées temporairement, sachant que l'émetteur transmet outre les données télétexte de base des pages télétexte de structure conventionnelle, des données complémentaires pour chacune desdites pages télétexte, et ce sous la forme d'une ou de plusieurs pages complémentaires dédiées, numérotées selon le système hexadécimal, dont la structure présente le format des pages télétexte normales, ces données complémentaires étant mémorisées temporairement, au niveau de l'émetteur, séparément des données de base d'une page télétexte souhaitée, et sachant en outre les numéros des pages complémentaires codés selon le système hexadécimal en dehors du système décimal, sont associés selon un schéma défini, aux numéros des pages télétexte conventionnelles correspondantes qui, eux, sont attribués selon le système décimal et peuvent être sélectionnés par l'intermédiaire d'un clavier décimal ; ledit procédé étant **caractérisé en ce que** d'autres données complémentaires possédant leur propre contenu d'image, sont transmises à la place ou en plus des données complémentaires selon un codage et un formatage identiques, et que, sur un écran de format 16/9, lesdites autres données complémentaires sont reproduites dans une zone d'image placée à côté d'une page télétexte ou d'une image TV conventionnelles ayant l'une et l'autre un format de 4/3.
